# EUROPEAN PATENT APPLICATION

(11) **EP 0 830 893 A1**
(43) Date of publication of application: **25.03.1998**
(21) Application number: 96919995.9
(22) Date of filing: 29.05.1996
(51) Int. Cl.: B01J 19/24, B01J 35/04

(54) **CATALYTIC REACTION DEVICE, CATALYTIC REACTION METHOD, AND LAMINATE USED FOR CATALYTIC REACTION**

(30) Priority: 31.05.1995 JP 158280/95; 19.12.1995 JP 349381/95
(71) Applicant: Kabushiki Kaisha Seta Giken, Osaka 567 (JP); OMRON CORPORATION, Kyoto-shi, Kyoto 616 (JP)
(72) Inventor: KAWAMURA, Yasuzo, Ibaraki-shi, Osaka 567 (JP); UCHIHORI, Yoshitaka, Ibaraki-shi, Osaka 567 67 (JP)
(74) Representative: Wilhelms, Rolf E., Dr.
(86) International application number: JP9601449
(87) International publication number: WO9638224

(57) **Abstract**

The present invention relates to a catalytic reaction device having a laminate provided in a fluid passageway and a catalytic reaction method.

The laminate body is constructed of laminated metallic plates which are made of catalytic metal or are attached on their surfaces with catalytic metal so as to regular small channels formed between the metallic plates and so as to make the metallic plates into heat generating plates or heat absorbing plates. Consequently, a dispersion is substantially uniformly caused in a fluid passing through the laminate body and a catalytic reaction is caused on the fluid at the same time as the laminate generates heat or absorbs heat.

## Description

### FIELD OF THE INVENTION

The present invention relates to catalytic reaction device, catalytic reaction methods and laminates used for catalytic reactions, in which a material fluid is allowed to come into contact with a catalytic metal at a predetermined temperature so as to cause a catalytic reaction.

### DESCRIPTION OF BACKGROUND ART

Typical catalytic reaction appliance comprises reforming device. The reforming device carries out a reforming reaction in which raw fuel such as natural gas, methanol, light oil such as naphtha, LNG, LPG or coal gas is allowed to come into contact with a catalytic metal together with steam at a predetermined temperature so as to be converted into hydrogen rich gas. This reforming reaction is endothermic reaction, accordingly, it is required that energy is supplied.

The aforesaid catalytic metal itself has no energy. Therefore, raw fuel is heated to a proper temperature by a gas burner, preheater, super heater or the like, and then delivered to the reforming device. Further, the reforming device is required to serve as a heat exchanger that heats a pipe, housing a catalytic metal, through a heat medium in order to maintain its catalytic reaction in the reforming device.

Such catalytic reaction appliance as comprising the above reforming device serving as the heat exchanger and the above preheater or the above super heater , however, has disadvantages in that temperature control is difficult, device's structure is complicated and large-sized, it takes a long time to start device, and following-up to load fluctuation is poor.

As a catalytic reaction device that partially solves the above disadvantages, Japanese Patent Application Laid-Open No. 61-275103 (1986) proposes an device in which electromagnetic induction heating is utilized. Specifically, a conductive substance and catalytic particles are mingled in a reforming tube made of material which has thermal insulation and bad conductor characters, and a high frequency current is energized to a conductive coil around the periphery of the reforming tube so as to cause excess current for heating on the surface of the conductive substance, thereby the conductive substance and the catalytic particles are maintained at a predetermined temperature.

The aforesaid publication also proposes such several forms as follows so that a conductive substance may be mingled with catalytic substance. One form is that particles of conductive substance are mingled with catalytic particles. Another form is that a coil-shaped conductive substance is buried in catalytic particles. Further another form is that a periphery of a conductive particle is covered with catalytic particles so as to make a particle-like form.

In these forms, the catalytic particles or conductive substance in contact with the catalytic particles generate heat. Accordingly, in theory, its whole sized can be miniaturized, the preparing time for starting the device can be reduced and the following-up to load fluctuation can be improved.

The above catalytic reaction device utilizing employing electromagnetic induction heating, however, has the following disadvantages. In the device, catalytic particles are provided at random then the catalytic particles or conductive substance in contact with the catalytic particles are heated by electromagnetic induction, accordingly, the fluid can not flow uniformly along catalytic particles. As a result, a polarized flow develops in the reforming tube, which selects and flows in the smoothest way in the reforming tube, therefore, it has failed to heat uniformly.

Especially, in case that particles of conductive substance are covered with catalytic metal or in case that catalytic particles are mingled with conductive substance particles, there are the conductive substance and catalysts electrically at random, which are heated by electromagnetic induction. Therefore, states of the objects heated by electromagnetic induction are non-uniform and a poor efficiency results.

Accordingly, the catalytic reaction device, in which catalytic substances and conductive substances are mingled and heated by electromagnetic induction, causes a non-uniform heating and a non-uniform flow, so that reforming reaction does not progress as much as the result of theoretical calculations, then reaction cause locally. Thus in practice, unless a plurality of catalytic reaction devices are placed in series, the result of reforming reaction is inadequate. Consequently, its energy loss is large and it fails to reduction its size and its preparing time for starting device and to obtain the superior following-up to load fluctuation.

The present applicants propose a heating device in Japanese Patent Application Laid-Open NO.3-98286 (1991). In the heating device, a regular constructed body is accommodated in a fluid passageway and is heated by electromagnetic induction. This is a mere device for heating fluid, which dose not suggest an optimum combination of catalysts and a constructed body in order to achieve a high efficiency.

The applicants also propose a heat exchanger in Japanese Patent Publication NO. 4-44189 (1992). In the heat exchanger, a heat exchanger tube is fixed to the surface of a regular constructed body. This is a mere heat exchanger to cool fluid, which also does not suggest an optimum combination of catalysts and a constructed body in order to achieve a high efficiency.

Thus, the present invention directs to solve the above problems. An object of the invention is providing epochal catalytic reaction device, catalytic reaction method and laminate used for catalytic reaction. These are able to reduce its whole size and its preparing time for the starting the device and to obtain the superior following-up to load fluctuation since they can cause a uniform catalytic reaction employing electromagnetic induction heating.

### SUMMARY OF THE INVENTION

According to a first aspect of the present invention, a catalytic reaction device comprises
a fluid passageway,
a coil provided around the fluid passageway and to which high frequency current is applied,
a high frequency current generator connected to the coil,
a laminate provided in the fluid passageway and constructed of metallic plates of conductive material which are laminated so as to be electrically connected with each other,
numbers of regular small channels formed between the metallic plates so that dispersions may be caused in the fluid passing through the laminate, and
catalytic metal that constitutes the above metallic plates or is attached to the surfaces of the above metallic plates substantially uniformly, wherein
a catalytic reaction is caused on the fluid flowing and dispersed in the laminate at the same time as the laminate generates heat.

In this device, the fluid flowing through the laminate is dispersed substantially uniformly. The metallic plates joined electrically are heated substantially uniformly by electromagnetic induction heating, and the fluid in contact with the metallic plates is heated uniformly. In addition, since the fluid is brought into a uniform contact with catalytic metal taking the form of the metallic plates, it is possible to proceed a specified catalytic reaction uniformly and efficiently. Particularly, increasing the surface area of the laminate causes a uniform catalytic reaction maintained at a predetermined temperature which is a little different from fluid temperature.

In the first aspect, it is preferable that a plurality of regular small channels formed between the metallic plates are provided with first small channels, second small channels and third small channels. Directions in which the first and second small channels extend respectively cross each other.

The third small channels permit to communicate between the first and second small channels.

This structure allows the fluid passing through the laminate to be uniformly dispersed by means of introducing the fluid into the first, second and third small channels of the laminate in which metallic plates are regularly laminated. In addition, since the fluid passing through the laminate is dispersed substantially uniformly, the fluid is forced to come into a uniform contact with the surfaces of the metallic plates, so that catalytic reaction proceeds uniformly.

Also, in the first aspect, it is also preferable that the metallic plates have irregularities such as satin or embossment on their surfaces. These irregularities cause turbulent flows in the fluid then the action of catalysts attached on metals substantially uniformly are effectively occurred.

Further, it is also preferable that each metallic plate constituting the laminate has a thickness falling in the range from 30 µm to 1mm and the frequency of high frequency current that energizes the coil falls within a range from 15KHz to 150KHz.

When the thickness of the metallic plate falls within the range from 30 µm to 1mm, electrical power is easily applied and it is easy to ensure small channels by corrugating metallic plates machinery in order to increase a heat transmitting area. Also, when the frequency falls in the range from 15KHz to 150KHz, a loss of the copper coil and a loss of switching elements are suppressed. Particularly, these losses are minimized in the frequency range from 20KHz to 70KHz.

It is also preferable that the heat transmitting area of the laminate is equal to 2.5cm² or more per 1cm³ of fluid. When metallic plates are laminated so that the heat transmitting area of the laminate may be equal to 2.5cm² or more, preferably equal to 5cm² or more per 1cm³of fluid, the efficiency of heat exchange rises.

Accordingly, it is also preferable that the amount of fluid to be heated is equal to 0.4cm³ or less per 1cm² of heat transmitting area in the laminate. When the amount of fluid to be heated is equal to 0.4cm³ or less, preferably equal to 0.1cm³ or less per 1cm² of heat transmitting area in the laminate, the rapid responsibility can be obtained concerning transmitting heat to fluid.

According to the first aspect of the invention, a catalytic reaction method comprises,
a step of substantially uniformly dispersing fluid allowed to pass through a plurality of regular small channels in a laminate which is constructed of metallic plates made of conductive material so as to be electrically connected with each other and further which is disposed in a fluid passageway,
a step of substantially uniformly heating the fluid passing through the laminate with the substantially uniform dispersion, where the fluid is heated through the metallic plates having the small channels and generating heat substantially uniformly by a high frequency current through a coil provided around the fluid passageway,
a step of causing a uniform catalytic reaction at the same time as the uniform heating to allow the fluid to come into contact with catalytic metal that constitutes the metallic plates or is attached on the surfaces of the metallic plates substantially uniformly.

Thus in this method as well as in the catalytic reaction device of the first aspect, increasing the surface area of the laminate permits the uniform catalytic reaction maintained at a specified temperature of which difference from fluid is a little.

According to a second aspect of the invention, a catalytic reaction device comprises,
a fluid passageway,
a coil provided around the fluid passageway and energized by high frequency current,
a high frequency current generator connected to the coil,
an assembly provided in the fluid passageway and constructed of conductive members so as to be electrically connected with each other and so as to form a plurality of channels enabling the fluid to flow in the axial direction of the fluid passageway, dispersion members provided on at least a fluid entrance side of the assembly for distributing fluid into the channels, and
a catalytic metal that constitutes the above conductive members or is attached to the surfaces of the above conductive members substantially uniformly, wherein
a catalytic reaction is caused on the fluid flowing in the assembly at the same time as the assembly generates heat.

According to the second aspect of the invention, a catalytic reaction method comprises,
a step of forming a substantial uniform flow in a fluid passageway by dispersing a fluid to reach an assembly provided in the fluid passageway and constructed of conductive members so as to be electrically connected with each other and so as to form a plurality of channels enabling the fluid to flow in the axial direction of the fluid passageway,
a step of substantially uniformly heating the fluid passing through the fluid passageway, where the fluid is heated through the conductive members constituting the assembly and generating heat substantially uniformly by a high frequency current going through a coil provided around the fluid passageway,
a step of causing a substantial uniform catalytic reaction at the same time as the substantial uniform heating by allowing the fluid to come into contact with catalytic metal that constitutes the conductive members or is attached on the surfaces of the conductive members.

In accordance with the catalytic reaction device and the catalytic reaction method of the second aspect, a uniform flow is formed along the channels of the assembly, so that a uniform electromagnetic induction heating and a uniform catalytic reaction are caused along the flow. When a proper surface area of the assembly is given and the specific surface area of the assembly to the unit volume of the fluid is reduced, it is possible to accelerate a catalytic reaction in case of requiring a certain difference of temperature between the fluid and the catalytic metal.

According to a third aspect of the invention, a catalytic reaction device comprises,
a fluid passageway
a laminate disposed in the fluid passageway
a plurality of regular small channels formed between metallic plates constituting the laminate so as to cause a substantial uniform dispersion of a fluid flowing through the laminate, and
a heat exchanger tube fixed so as to substantially uniformly cover the metallic plates and so as to be disposed along the small channels, wherein a catalytic reaction on the fluid flowing through the laminate with dispersion causes at the same time as heat absorbing by the heat exchanger tube.

According to the third aspect, a catalytic reaction method comprises,
a step of substantially uniformly dispersing fluid allowed to pass through a plurality of regular small channels in a laminate disposed in a fluid passageway,
a step of substantially uniformly exchanging heat between a heat exchanger tube and the fluid passing through the laminate with the substantially uniform dispersion by the heat exchanger tube fixed so as to substantially uniformly cover metallic plates and so as to be disposed along the small channels,
a step of causing a substantial uniform catalytic reaction at the same time as the uniform heat exchange by allowing the fluid to come into contact with catalytic metal that constitutes the metallic plates or is attached on the surfaces of the metallic plates substantially uniformly.

In accordance with the catalytic reaction device and catalytic reaction method of the third aspect, a uniform heat absorbing and a uniform catalytic reaction can be achieved by using a heat exchanger tube in any cases without a limit to the case employing electromagnetic induction.

According to the present invention, a laminate used for catalytic reaction comprises
a laminate constructed of metallic plates made of conductive material which are laminated so as to be electrically connected with each other,
regular small channels formed between the metallic plates so that dispersion may be substantially uniformly caused in the fluid passing through the laminate, and
catalytic metal that constitutes the above metallic plates or is attached to the surfaces of the above metallic plates substantially uniformly.

In accordance with this laminate used for catalytic reaction, a uniform electromagnetic induction heating causing on the metallic plates constituting the laminate, a uniform dispersion or mixing of fluid flowing through the metallic plates, and a uniform reaction in catalytic metal of the metallic plates are proceed at the same time.

### BRIEF DESCRIPTION OF THE DRAWINGS

Fig. 1 is a perspective view of a catalytic reaction device body according to a first aspect of the present invention;
Fig. 2 illustrates a structure of a heat generator;
Fig. 3 is a top view illustrating a temperature distribution of a heat generator;
Fig. 4 illustrates a catalytic reaction device utilizing electromagnetic induction;
Fig. 5 is a sectional view of a structure of a device body;
Fig. 6 is a graph diagram showing a relationship between plate thickness and thermal efficiency;
Fig. 7 is a graph diagram showing a relationship between the frequency of high frequency current and the thermal efficiency;
Fig. 8 is a graph diagram showing a relationship between the height of thread of a heat generator and the thermal efficiency;
Fig. 9 is a graph diagram showing a relationship between the height of thread of a heat generator and the heating surface area;
Fig. 10 is a graph diagram showing a relationship between the height of thread of a heat generator and the water layer thickness;
Fig. 11 is a diagram showing a catalytic reaction device body according to a second aspect of the invention;
Fig. 12 is a diagram showing main parts of a catalytic reaction device according to a third aspect of the invention;
Fig. 13 illustrates a structure of a heat absorber;
Fig. 14 is a system diagram of a fuel cell system in which a catalytic reaction device of the invention is utilized; and
Fig. 15 is a system diagram of another fuel cell system in which a catalytic reaction device of the invention is utilized.

### DESCRIPTION OF THE PREFERRED EMBODIMENTS

Preferred embodiments of the present invention will be described by referring to the accompanying drawings.

### The First Preferred Embodiment

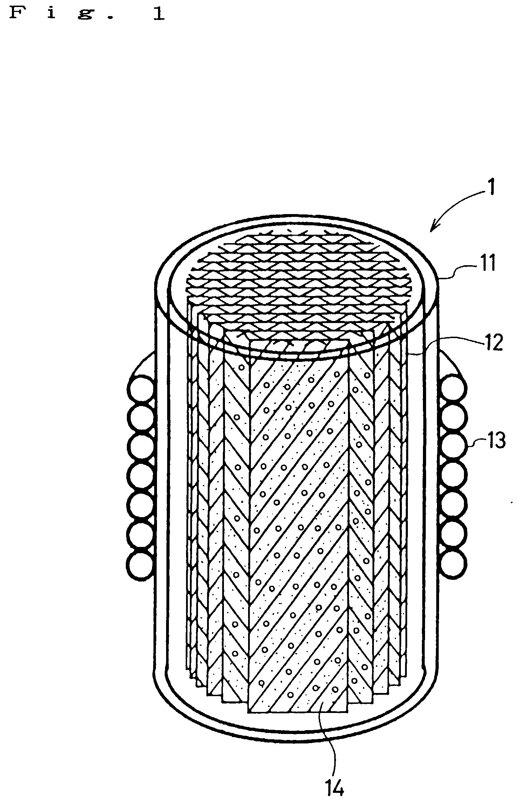

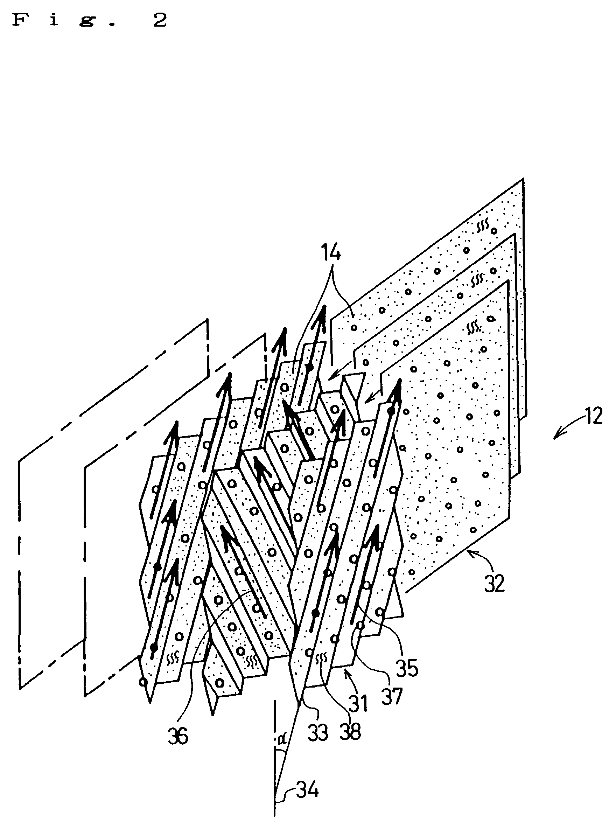

Figs. 1 to 10 relate to a first embodiment of the invention. Fig. 1 shows a perspective view of main parts of a catalytic reaction device employing electromagnetic induction heating and Fig. 2 illustrates a structure of a laminate.

Referring to Fig. 1, a catalytic reaction device body 1 comprises a non-conductive pipe 11 for forming a fluid passageway, a laminate 12 disposed in the pipe 11, a coil 13 wound around the pipe 11 and catalytic particles 14 that are substantially uniformly attached to the surfaces of metallic plates constituting the laminate 12.

Fig. 2 shows a structure of the laminate 12 for catalytic reaction that is incorporated into the device body 1. First metallic plates 31 bent in zigzag and flat second metallic plates 32 are alternately laminated so as to form the laminate 12 taking form of cylindrical form as a whole. Martensite stainless steels, e.g. SUS447J1, are used as a material of the first metallic plates 31 and the second metallic plates 32. Crests (or troughs) 33 of the first metallic plates 31 are inclined from a central axis 34 with an angle α or - α so that the crests (or troughs) 33 of the first metallic plates 31 adjacent to each other may cross with each other. The first metallic plates 31 and the second metallic plates 32 are welded by a spot welding at the intersections of the crests (or troughs) 33 of first metallic plates 31 adjacent to each other so that they may be electrically connected.

As a result, at a front side of one second metallic plate 32, first small channels 35 inclined from the central axis 34 with the angle α are formed between the second metallic plate 32 and a forward first metallic plate 31. And at a rear side of the second metallic plate 32, second small channels 36 inclined from the central axis 34 with the angle - α are formed between the second metallic plate 32 and a backward first metallic plate 31. The first small channel 35 and the second small channel 36 cross with an angle 2 × α . There are pores 37 on the surfaces of the first metallic plates 31 and the second metallic plates 32 in order to cause turbulent flows of fluid. The pores 37 serve as third small channels. In addition, the surfaces of the first metallic plates 31 and the second metallic plates 32 are not smooth but have fine irregularities 38 made by means of satin finishing or embossing. The irregularities 38 are negligibly small as compared with the height of the crests (or troughs) 33.

Catalytic particles 14 of a specific metal are uniformly attached to the surfaces of the first metallic plate 31 and the second metallic plate 32. As a method of attaching the catalytic particles 14, there are daubing, adhesion, vapor deposition, application or the like. In any method, the catalytic particles 14 are dispersed, or attached to the entire surface of the metallic plates 31, 32 so that the amount of the catalytic particles 14 per unit area may be nearly equal. The most uniform attaching method of catalytic particles is attained by making the metallic plates 31, 32 of the catalytic metal. This method can be employed when catalytic metals are readily available and inexpensive and further develops electric current due to electromagnetic induction easily.

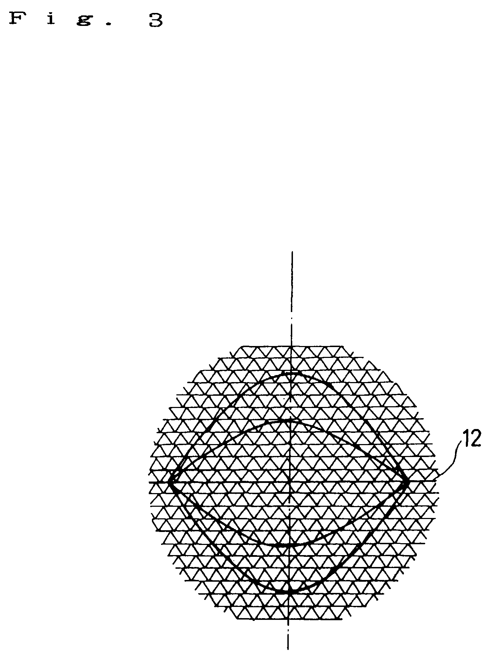

When high frequency current is allowed to pass through the coil 13 in order to produce a high frequency magnetic field in the laminate 12, eddy current occurs throughout the first metallic plate 31 and the second metallic plate 32, and then, the laminate 12 generates heat substantially uniformly. At this time, temperature distribution is extending along the length of the first metallic plate 31 and the second metallic plate 32 as shown in Fig. 3, which looks like an eye-shaped. That is, the center portions have a greater heat generation than the periphery. This is advantageous in heating a fluid that tends to flow in mid sections.

Referring to Fig. 2, in the laminate 12, first small channels 35 and second small channels 36 crossing with each other are formed so as to perform a dispersion between the peripheral part and the central part. In addition, the presence of the pores 37 forming the third small channels cause a dispersion of the fluid in the direction of the thickness between the first small channels 35 and the second small channels 36. Accordingly, these small channels 35, 36, and 37 cause macro-dispersion, macro-diffusion and macro-vaporization of fluid throughout the laminate 12. Additionally, the fine irregularities 38 on the surface of the metallic plates cause micro-dispersion, micro-diffusion and micro-vaporization. As a result, the fluid flows through the laminate 12 substantially uniformly and a uniform contact between the fluid and the first and second metallic plates 31, 32 is led. Therefore, a uniform heat transfer and a uniform catalytic reaction are both assured. And also, the catalytic particles 14 may be attached only to portions where a catalyst reacts at a specific temperature of the fluid in the laminate 12. A laminate 12 free from catalytic particles 14 and other laminate 12 with catalytic particles 14 may be disposed in serial multistage so that their positions in a circumferential direction may shift from each other.

The coil 13 in Fig. 1 is obtained by stranding-up litz wires. The coil 13 is wound around the periphery of the pipe 11 or is buried within the wall of the pipe 11 by winding it within a direction of a wall thickness of the pipe 11.

The pipe 11 holds the coil 13, forms a fluid passageway and contains the laminate 12 in the passageway. Therefore, the pipe 11 is made of a material that is non-magnetic and has resistance to corrosion, heat and pressure. Examples of the material include inorganic materials such as ceramics, FRP (fiber-reinforced plastics), resins such as fluororesins and non-magnetic metals such as stainless steels. The most preferred are ceramics.

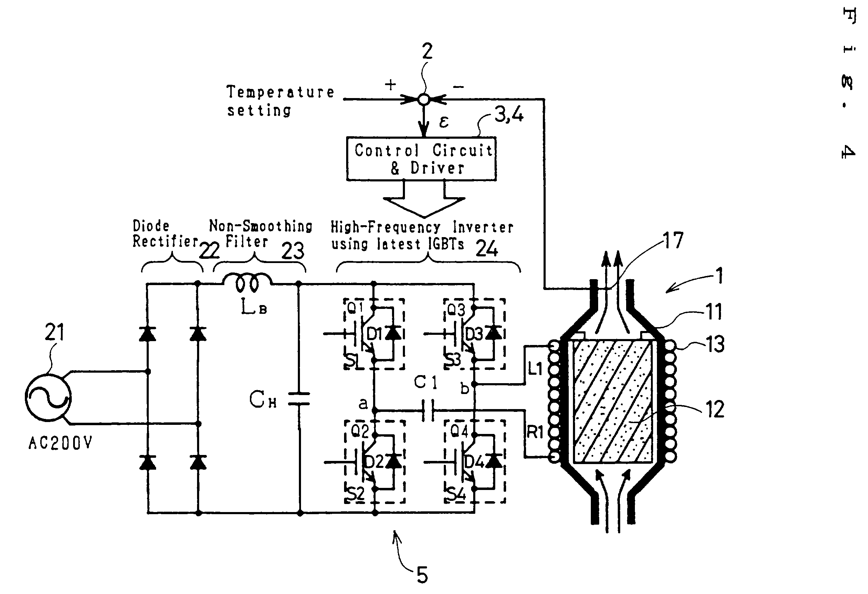

The entire device structure for electromagnetic induction heating according to the first embodiment will be described by referring to Fig. 4. A catalytic reaction device comprises a device body 1, a PID temperature controller 2 having two degree of freedom, a phase-shift controller 3, a gate driver 4 and a sensor-less high-power factor high-frequency inverter 5. A temperature sensor 17 is disposed on an outlet for fluid in the device body 1 and the temperature sensor 17 is connected to the temperature controller 2.

The high-frequency inverter 5 comprises a rectifier 22 for an AC power supply 21, a non-smoothing filter 23 and a high-frequency inverter 24. The output power and frequency of the high-frequency inverter 24 are controlled by the phase-shift controller 3 and the gate driver 4, so that the commercial AC power supply 21 is efficiently converted into high-frequency current, thus effective utilization of electrical energy is led.

The temperature controller 2 comprises a PID temperature controller having two degrees of freedom of fuzzy plus auto-tuning and outputs output voltage control signals to the phase-shift controller 3. As described, when the temperature sensor 17 for output control is disposed in the outlet of the pipe 11, it is possible to control outputs taking into account losses in the inverter 5 and the coil 13.

The high-frequency inverter 24 has four switching elements Q1 to Q4. Specifically, Q1 and Q2 are connected in series, Q3 and Q4 are connected in series and the former and the latter are connected in parallel. A heating system comprising a non-metallic pipe 11 wound with the coil 13 and the laminate 12 made of conductive metal can be shown by a transformation circuit model whose leakage inductance is large and can be indicated by a simple R-L circuit. By connecting a compensating capacitor C1 to this R-L circuit in series, it is possible to obtain a non-time-variant circuit system whose electric circuit constant changes little. Therefore, it is easy to establish synchronization which compensates for L of an R-L load system by the resonance capacitor C1. This permits an optimum circuit design for working frequency and the resonance capacitor C1. The switching elements Q1 to Q4 are expressed by a circuit diagram where switches S1 to S4 and diodes D1 to D4 are connected in parallel, and are formed by using semiconductor power devices such as SIT (Static Induction Transistor), B-SIT, MOSFET (Metal-Oxide Semiconductor FET), IGBT, MCT and the like.

When the switches S1, S4 are closed, the current flows to a circuit from point "a" to point " b" through loads L1, R1. When switches S2, S3 are closed, the current flows to a circuit from the point "b" to the point "a" through the loads L1, R1.

That is, as viewed from the loads L1, R1, the current flows in order or in reverse order. Each of the switches S1 to S4 drives at a voltage pulse of a little less than 50% duty cycle. The voltage drive pulse of the switches S1, S2 is referred to as reference phase pulse, and that of the switches S3, S4 is referred to as control phase pulse. By varying a phase difference φ between the reference phase and the control phase continuously from 0 to 180 °C, it is able to control output voltage (PWM ;Pulse Width Modulation). Theoretically, the output power can be varied continuously from 0 to the maximum output that is determined by load circuit constant and inverter operating frequency.

Although the phase shift PWM system has been described as a power control system, examples of other power control methods include DC power supply control (PAM system) by active PWM rectifying circuit or high frequency transistor chopper, a variable frequency control (PFM system) and pulse density modulation control (pulse cycle control) (PDM system). Specifically, all performance requirements for inverters able to work in combination with the laminate shown in Fig. 2 are that they can alternately switch a semiconductor power device, can perform a certain degree of power control for temperature adjustment and has high power factor.

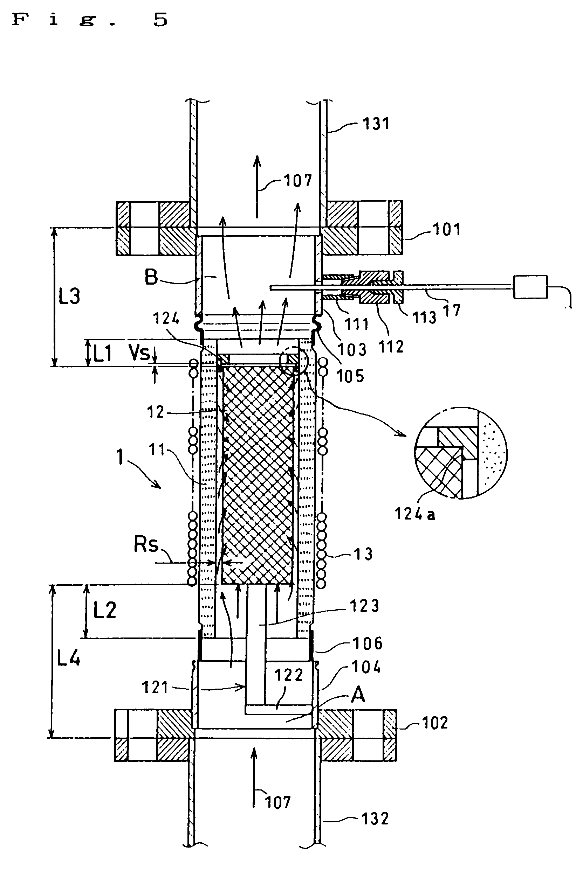

Fig. 5 shows a concrete example of a device body 1 of the first embodiment that can be directly incorporated into a pipeline. In Fig. 5, the device body 1 mainly comprises flanges 101, 102, short tubes 103, 104, a pipe 11, a coil 13, a laminate 12 and tubes 105, 106. Reference numeral 2 designates a temperature controller, numeral 5 designates an inverter and numeral 17 designates a temperature sensor.

Materials of the flanges 101, 102 and short tubes 103, 104 are required to have resistance to corrosion against various fluid handled in chemical plants. In order to avoid influences of magnetic flux generated by the coil 13, austenite stainless steels such as non-magnetic SUS316 are suitable. Although austenite stainless steels are generally considered as being non-magnetic, they are not completely non-magnetic but are somewhat affected by magnetic flux. The flange 101 and the short tube 103 are formed into one flange with one short tube by welding or the like, and the flange 102 and the short tube 104 are also formed into other flange with other short tube by welding or the like. Particularly, a socket 111 made of SUS316 is fixed to the short tube 103 locating in the outlet side for fluid 107 by means of welding or the like so that a fitting 112 for fixing the temperature sensor 17 may be screwed into the socket 111. It is possible for a tip of the temperature sensor 17 to be fixed at a vicinity of the center in the short tube 103 by screwing a cap metal fitting 113 into the fitting 112. It is preferable that the socket 111 is closed to the flange 101 in such a degree that parts of the temperature sensor 17 (e.g. the fitting 112 ) will not interfere the flange 101. Instead of fixing the flanges 101, 102 to the short tubes 103, 104 respectively by a welding or the like, each flange with short tube may be integrally formed as one integrated whole.

A sensor to be attached to the short tube 103 is not limited to a temperature sensor but may be replaced with other sensors such as pressure sensors.

The laminate 12 is placed in the axial center of the pipe 11 and the portion of the periphery of the pipe 11 which surrounds the laminate 12 is wound by the coil 13. The pipe 11 may be formed by joining two or more pipes because of manufacturing restriction.

Both ends of the pipe 11 and the short tubes 103, 104 are not directly jointed but connected through the tubes 105, 106. As a material of the tubes 105, 106, high-strength thermal resistance alloys such as Fe-Ni-Co alloys are suitable. In general, the thermal expansion coefficient of ceramics is small and that of austenite stainless steels are large. Therefore, when ceramics are used for the pipe 11 and austenite stainless steels are used for the short tubes 103, 104 then the pipe 11 and the short tubes 103, 104 are directly connected, a great thermal stress generates. Thus, as a material of the tubes 105, 106 intervening between the pipe 11 and the short tubes 103, 104, there are selected ones which have the thermal expansion coefficient intermediate between that of ceramics and that of austenite stainless steels. Junction between the short tubes 103, 104 and the tubes 105, 106, and junctions between the pipe 11 and the tubes 105, 106, are attained by a welding using a silver wax or a nickel wax.

The tube 106 is straight but the tube 105 is corrugated and flexible in the axial direction. When fluid is heated in the device body 1, a pipeline as well as the device body 1 extends axially due to thermal expansion. When incorporated the device body 1 into the pipeline by a flange junction, unexpected thermal stress might occur in the weakest portions of the device body 1. For this reason, the corrugated tube 106 for the relief of thermal expansion is disposed in the device body 1. The corrugated tube 106 can absorb manufacturing errors in the axial direction and the gap between the pipeline and the device body 1 concerning an axial center. Since the corrugated tube 106 is also bendable, it can absorb errors in a degree of a parallel between the flanges 101, 102.

The laminate 12 has a diameter D that allows to form an annular clearance Rs between the peripheral surface of the laminate 12 and the inner surface of the pipe 11. The laminate 12 is inserted into the pipe 11 so that the axial center of the pipe 11 may be matched with that of the laminate 12. The laminate 12 is held by a holding member 121. The diameter D of the laminate 12 is determined so that the pipe 11 may have an annular clearance Rs greater than the difference in the radial thermal expansion between the pipe 11 and the laminate 12 when the fluid 107 is heated in the device body 1. The holding member 121 comprises a metallic bar 122 and a holding bar 123. The metallic bar 122 is welded to the short tube 104 at the inflow side A by welding or the like and extends radially. The non-magnetic holding bar 123 is fixed to the end of the metallic bar 122 so as to extend from the inflow side A to the outflow side B.

A position of the holding bar 123 match with the axial center of the laminate 12. The holding bar 123 is made of ceramics and so on, further has excellent resistances to heat and corrosion. The holding bar 123 holds the laminate 12 while positioning the laminate 12 in the pipe 11 with its tip so that the laminate 12 may face to the portion wound by coil 13. A numeral number 124 shows a ring-shaped stopper 124 which is made of ceramics and so on. The materials such as a ceramics are non-magnetic and has excellents resistances to heat and corrosion. The ring-shaped stopper 124 is fit in the pipe 11 from the outflow side B of the fluid 107 and is fixed with a clearance Vs between the ring-shaped stopper 124 and the laminate 12. The clearance Vs equals to or somewhat smaller than a distance of the thermal expansion in the axial direction of the laminate 12. The ring-shaped stopper 124 is positioned at the outflow side B of the pipe 11 so as to cover the annular clearance Rs.

And the ring-shaped stopper 124 is engaged with the laminate 12 when the laminate 12 expands thermally, thereby blocking the annular clearance Rs at the outflow side B. As shown in an enlarged view in Fig. 5, when a fitting portion 124a is provided with the ring-shaped stopper 124 and the corner of the laminate 12 is allowed to be fit into the fitting portion 124a, the positioning of the laminate 12 into the pipe 11 is facilitated.

When the fluid 107 is allowed to flow from the inflow side A to the outflow side B in the device body 1 while the fluid 107 is heated through the pipe 11 and the laminate 12 by electromagnetic induction from the coil 13, a radial thermal expansion difference occurs between the pipe 11 and the laminate 12. On the other hand, an annular clearance Rs greater than the above radial thermal expansion difference is formed between the pipe 11 and the laminate 12. Accordingly, the annular clearance Rs becomes narrow during heating the fluid 107, whereby the thermal expansion difference is absorbed. This prevents the action of a stress caused by the laminate 12 which expands thermally then touches and presses the pipe 11. Further, the laminate 12 also expand thermally in axial direction, in this case, the clearance Vs between the laminate 12 and the ring-shaped stopper 124 becomes narrow then this thermal expansion in axial direction is absorbed.

The fluid 107 flown into the inflow side A of the device body 1 from pipelines 131, 132 flows into the laminate 12 and is heated then flows into the outflow side B. In this time, some fluid 107 tends to flow into the annular clearance Rs directly from the inflow side A or from the laminate 12, and pass through the annular clearance Rs and then flow into the outflow side B. However, the laminate 12 fits in the ring-shaped stopper 124 by the thermal expansion in the axial direction so as to close the annular clearance Rs at the outflow side B, thereby preventing the fluid 107 from directly flowing into the outflow side B. So that, although such a pressure as presses the fluid 107 towards the outflow side B is generated in the annular clearance Rs, the fluid 107 in the annular clearance Rs is forced to flow into the laminate 12 by the pressure.

Therefore, even when the laminate 12 is heated by the electromagnetic induction from coil 13, it is possible to prevent the pipe 11 from being damaged by the thermal expansion of the laminate 12. Even when an annular clearance Rs for absorbing the thermal expansion of the laminate 12 is formed, the laminate 12 also expands thermally in axial direction and becomes fitting in the ring-shaped stopper 124, so that the annular clearance Rs is closed by the ring-shaped stopper 124 at the outflow side B. Therefore, the fluid 107 in the annular clearance Rs can be forced to flow into the laminate 12. Accordingly, the fluid 107 can be uniformly heated by the laminate 12.

In cases that SUS316 is used for the flanges 101, 102, the heat generation of the flanges 101, 102 is suppressed by the following setting. Distances L3, L4 between the flanges 101, 102 and the laminate 12 are respectively setting so as to be 0.8 times for an inner diameter D of the pipe 11 (i.e. D × 0.8) or more when the inner diameter D of the pipe 11 falls a range within 10cm. And the distances L3, L4 between the flanges 101, 102 and the laminate 12 are respectively setting so as to be 8cm or more when the inner diameter D of the pipe 11 is 10 cm or more. It is also preferable that the distances L1, L2 between the laminate 12 and the tubes 105, 106 are 5cm or more respectively.

Next, description will be given of the results of the tests conducted for the laminate 12 of the first embodiment. There were examined as to the influences of the frequency to the laminate 12, the influences of the thickness of the thin plate members constituting the laminate 12, the influences of the heat transmitting area of the laminate 12 and the influences of the integration degree of the heat transmitting area of the laminate 12.

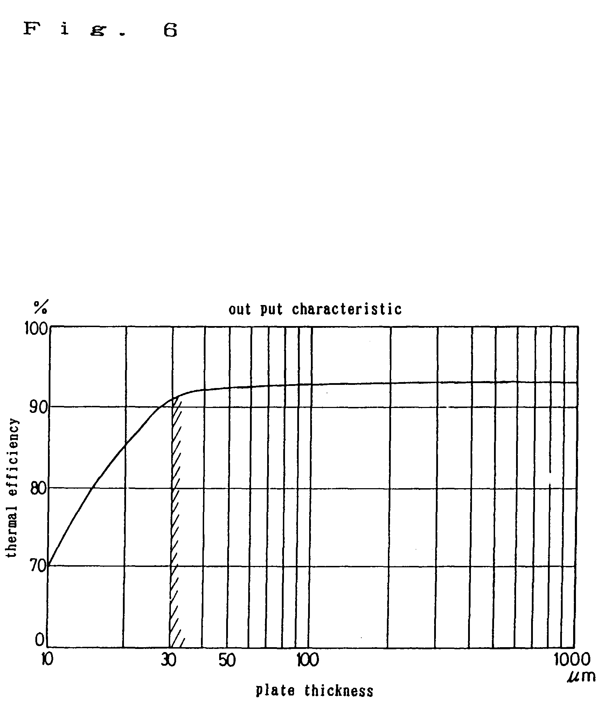

Fig. 6 shows a relationship between the plate thickness and the thermal efficiency. Heat tests were conducted in the range from 20 KHz to 40KHz by using laminates whose diameter is 10cm or 5cm. The thickness of a metallic plate was changed in a range having a value of 50 µm as a center value in order to measure the overall thermal efficiency. The material of the metallic plate was SUS447J1.

As can be seen from Fig. 6, when thickness is over 30 µm, the increase rate of thermal efficiency is suddenly slow down and the thermal efficiency is almost constant at the value of more over 90%. When thickness is equal to 30 µm or less, a decrease rate in the thickness of the metallic plate decreases more greatly as thickness becomes thinner.

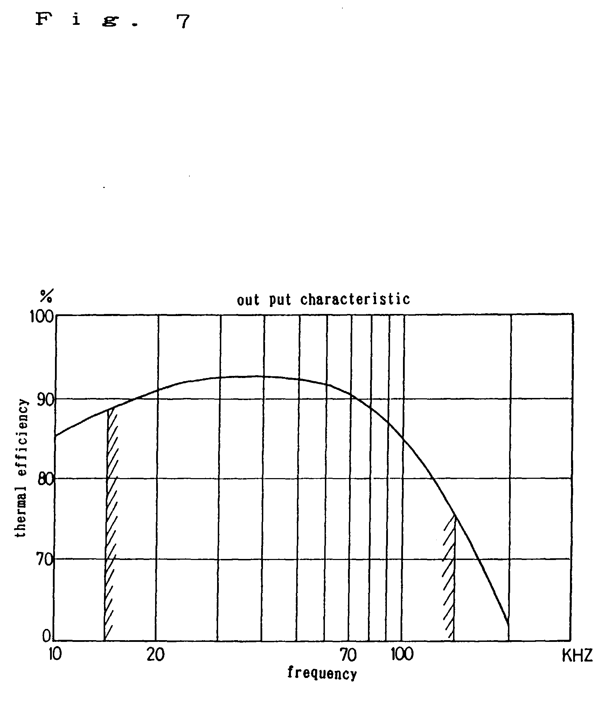

Fig. 7 shows a relationship between the frequency and the thermal efficiency. A laminate was used in order to measure the overall thermal efficiency while changing the frequency, which has a 10cm diameter, a 50 µm plate thickness and a 3mm height of thread. The material of the metallic plate was SUS447J1. As can be seen from Fig. 7, the thermal efficiency decreases suddenly within higher range of frequency whereas the thermal efficiency decreases gradually within the lower range of frequency. It would be realized that the frequency range from 20KHz to 70KHz were suitable in order to maintain the high thermal efficiency around 90%. In practice, the frequency range from 15KHz to 150KHz was applicable range since the thermal efficiency was equal to 70% or more within it.

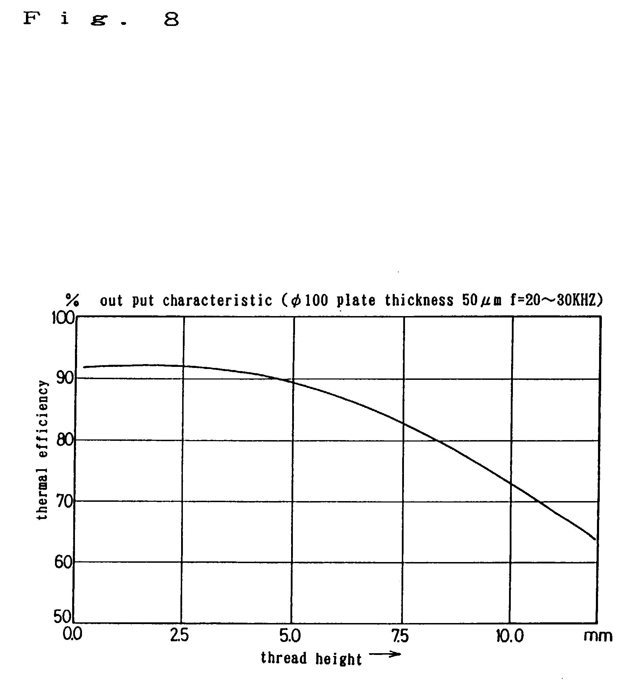

Fig. 8 shows a relationship between the height of thread and the thermal efficiency. Metallic plates having 50 µm thick were laminated corrugatedly so as to obtain a plurality of laminates. The plurality of laminates were subjected to measure the overall thermal efficiency in the range from 20KHz to 30KHz, which had 10 cm diameters and different heights of the thread from each other.

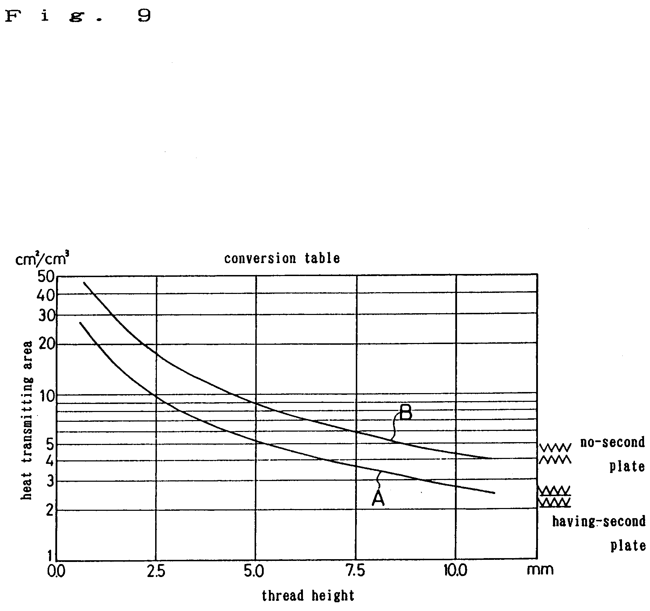

The relationship between the height of thread and the heat transmitting area in the above measurement is shown in Fig. 9. In Fig. 9, a line A shows the results in cases that a second metallic plates were used and a line B shows the results in cases that the second metallic plates were omitted.

As can be seen from Fig. 8, the thread height of 11mm or less was applicable in practice since the thermal efficiency was equal to 70% or more at the thread height of 11mm or less. Further, as can be seen from the line A in Fig. 9, the heat transmitting area per 1cm³ was equal to 2.5cm² or more at the thread height of 11mm or less. In order to obtain thermal efficiency of around 90%, it is preferable that the height of thread is 5mm and the heat transmitting area per 1cm³ is equal to 5cm²or more.

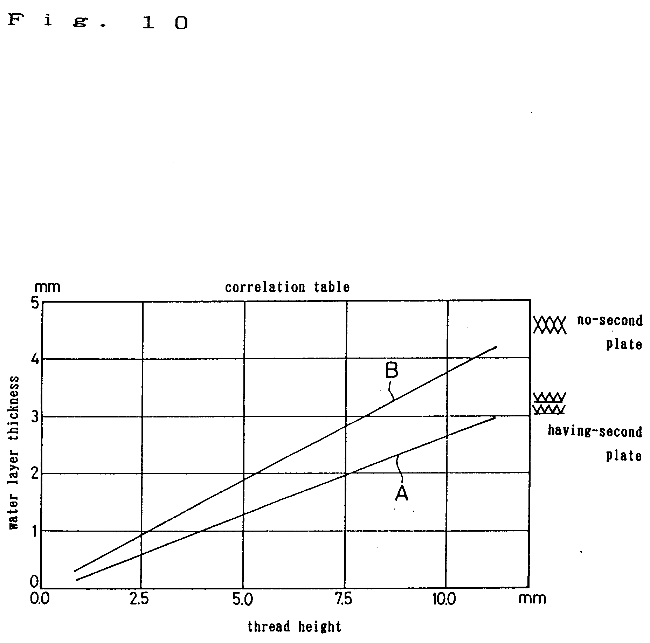

Fig. 10 shows a relationship between the height of thread and the water layer thickness. Metallic plates having 50 µm thick were laminated corrugatedly so as to obtain a plurality of laminates. The plurality of laminates were subjected to measure the average water layer thickness of the laminates, which had 10 cm diameters and different heights of the thread from each other. In Fig. 10, a line A shows the results in cases that a second metallic plates were used and a line B shows the results in cases that the second metallic plates were omitted. In case that thermal efficiency of 70% or more is required, the water layer thickness should be equal to 4mm or less. This corresponds to 0.4cm³ of the fluid to be heated by the 1cm² heat transmitting area of the laminate. However, it is obtained from experience that the water layer thickness is preferably equal to 1mm or less in order to maintain rapid heating and high responsiveness. This corresponds to 0.1cm³ of the fluid to be heated by the 1cm² heat transmitting area of the laminate.

### The Second Preferred Embodiment

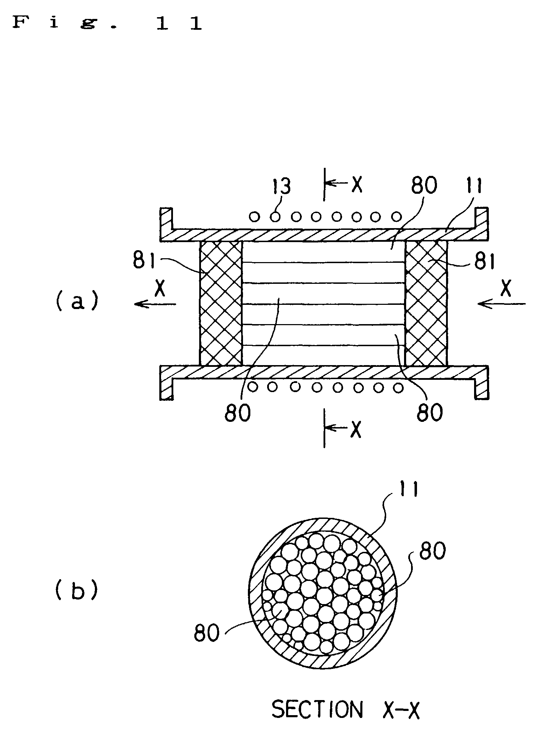

Description will be given of a second preferred embodiment of the present invention by referring to Fig. 11. The first embodiment employs the laminate 12 shown in Fig. 2, in which the temperature difference between the laminate and fluid is reduced by increasing the specific surface area of the laminate to a unit capacity volume of fluid, thereby facilitating a catalytic reaction of fluid. In some cases, however, it is desirable to facilitate a catalytic reaction of fluid by raising the temperature on the surface of a laminate without increasing the specific surface area to the unit capacity volume of fluid as in the first embodiment.

In this case, it is effective to use an assembly 79 shown in Figs. 11(a) and 11(b). Fig. 11(a) is a longitudinal sectional view of an assembly 79 and Fig. 11(b) is a lateral sectional view of the assembly 79. The assembly 79 is formed by binding regularly and closely a plurality of small diameter pipes 80 extending in the axial direction of the pipe 11. The small diameter pipes 80 are joined by a welding or a metal brazing. The inside of the small diameter pipes 80 and spaces between the pipes 80 serve as a passageway of fluid. In this case, the assembly 79 is inserted into the pipe 11 by allowing the periphery of the small diameter pipes 80 to come into contact with the inner surface of the pipe 11. The assembly 79 further includes dispersion members 81 that disperse a fluid flow at both end sides of the pipe 11. Other structural features of the second embodiment are the same structural features as are included of the device body 1 shown in Fig. 1.

As described above, when the small diameter pipes 80 are regularly assembled so as to avoid their electrical isolation and particularly so that they may are readily and electrically conducted in view of the sections of the assembly 79, eddy currents due to electromagnetic induction occur throughout a whole of the assembly 79 then heating irregularity becomes less in the the assembly 79. The fluid flows only axially along small channels partitioned by the small diameter pipes 80 of the assembly 79 after the fluid is dispersed equally by one of the dispersion members 81, then the fluid has opportunities to come into contact with walls of the small channels partitioned by the small pipes 80. Hereon, with respect to the assembly 79 comprising the small diameter pipes 80, the specific surface area to the unit capacity volume is smaller and a surface temperature is higher than the laminate 12 shown in Fig. 2 although the pressure loss of fluid is a little. Consequently, a catalytic reaction in the fluid is facilitated. Also, in place of the small pipes 80, the assembly may be assembled with a plurality of plates so as to make its cross section latticed. Thereby, a plurality of axial small channels through which fluid passes are formed. Consequently, the same effect as the small diameter pipes 80 has is obtained.

Thus, a catalytic reaction device comprising the assembly 79 including a plurality of small pipes 80 shown in Fig. 11 instead of the laminate 12 shown in Fig.2 can be utilized in practice even though the frequency is equal to 150KHz or more (e.g., 150-200KHz) and the heat transmitting area per 1cm³ of the fluid is equal to 2.5cm² or less. In other words, heating is possible at 150KHz or more when thin pipes are used since available frequencies vary with the shape of the assembly. Also, in some cases depending on the kind of catalytic metal and reactive fluid, it may be preferable that a temperature difference Δt is great. In such cases, the heat transmitting area should be equal to 2.5cm² or less.

### The Third Preferred Embodiment

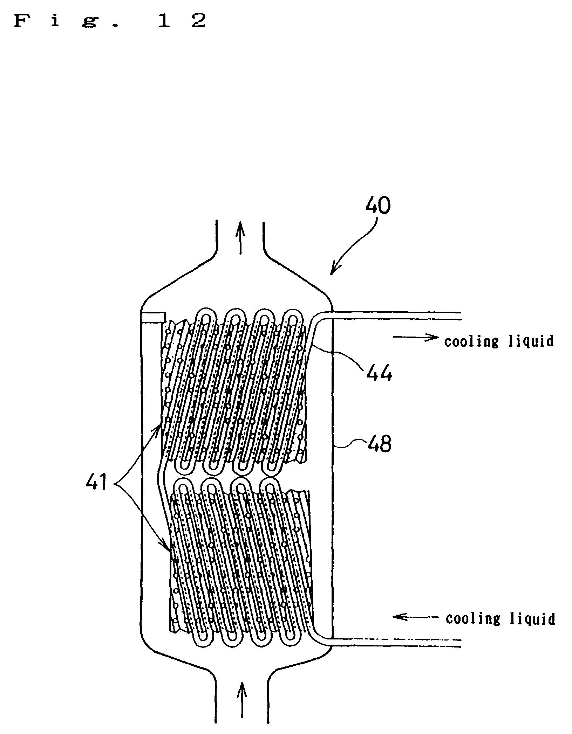

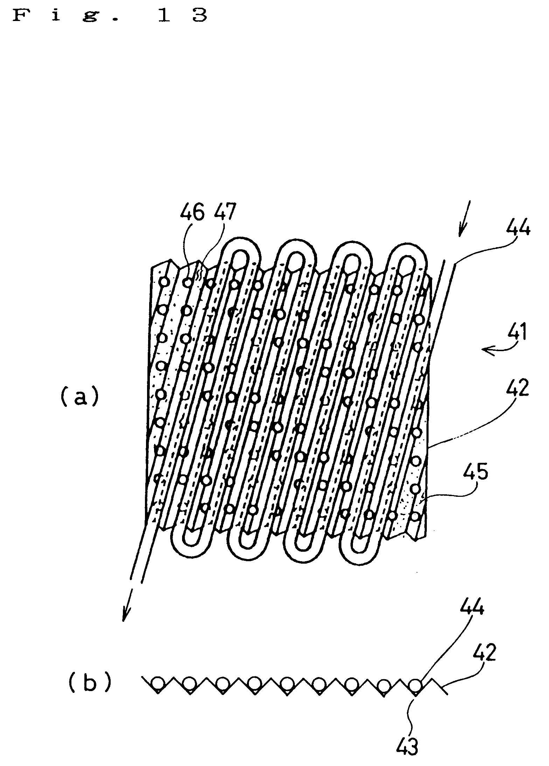

The first and second embodiments as previously described relate to the catalytic reaction devices and catalytic reaction methods for use in generating heat. A third embodiment relates to ones for use in absorbing heat. Fig. 12 is a diagram showing main parts of a catalytic reaction device of this embodiment and Fig. 13 is a diagram showing a structure of a heat absorber.

A catalytic reaction device body 40 in Fig. 12 comprises a pipe 48 containing heat absorbers 41. As shown in Fig. 13, the heat absorber 41 comprises a heat exchanger tube 44 that is fixed to crests (or troughs) 43 of zigzag-shaped (corrugated) metallic plates 42 by a welding or a metal brazing. A material having high heat transfer coefficient and superior corrosion resistance to fluid are suitable as a material of the metallic plate 42. Catalytic particles 45 are substantially uniformly attached to the surface of the metallic plate 42 by daubing, adhesion, application, vapor deposition or the like.

The surface of the metallic plate 42 has pores 46 and fine irregularities 47 as obtained by satin finishing or embossing.

The heat exchanger tube 44 is used for flowing a cooling liquid in itself and is bent so as to be disposed along the crests (or troughs) 43 of metallic plates 42. When a specified cooling liquid is introduced into the heat exchanger tube 44, the whole metallic plate 42 serves as a heat absorber. Also, in order to decrease the heat gradient of the cooling liquid in the heat exchanger tube 44, an inlet head pipe and an outlet head pipe may extend towards the lower bent portions side and the upper bent portions side of the heat exchanger tube 44 respectively, then the lower bent portions and the upper bent portions may be connected to the inlet head pipe and the outlet head pipe respectively.

Small channels are formed between the crests (or troughs) of each metallic plate 42. The metallic plates 42 are alternately laminated so that the crests (or troughs) formed on the metallic plates 32 adjacent to each other may cross with each other. These metallic plates 42 are, as it were, the first metallic plates 31 with the heat exchanger tube 44 in place of the second metallic plate 32 shown in Fig. 2. Consequently, the heat absorber 41 is formed. The heat absorber 41 is contained in the pipe 48 as shown in Fig. 12. When fluid is allowed to flow from a low side of the catalytic reaction device 40 shown in Fig. 12, the fluid disperses in the directions of thickness and width of the heating absorber 41 because the small channels along the crests (or troughs) 43 of the metallic plates 42 adjacent to each other cross with each other and there are pores 46 on the surface of each metallic plate 42 for communicating between one and other sides of each metallic plate 42. In other words, some of the fluid in contact with the metallic plates 42 under substantially same conditions can cause substantially same catalytic reactions, and at that time, the generated heats can be absorbed by the heat exchanger tube 44 under substantially same conditions. Therefore, catalytic reaction can be caused uniformly on the whole of the fluid by simply allowing fluid to flow through the catalytic reaction device 40.

### Application of The First to Third Embodiments

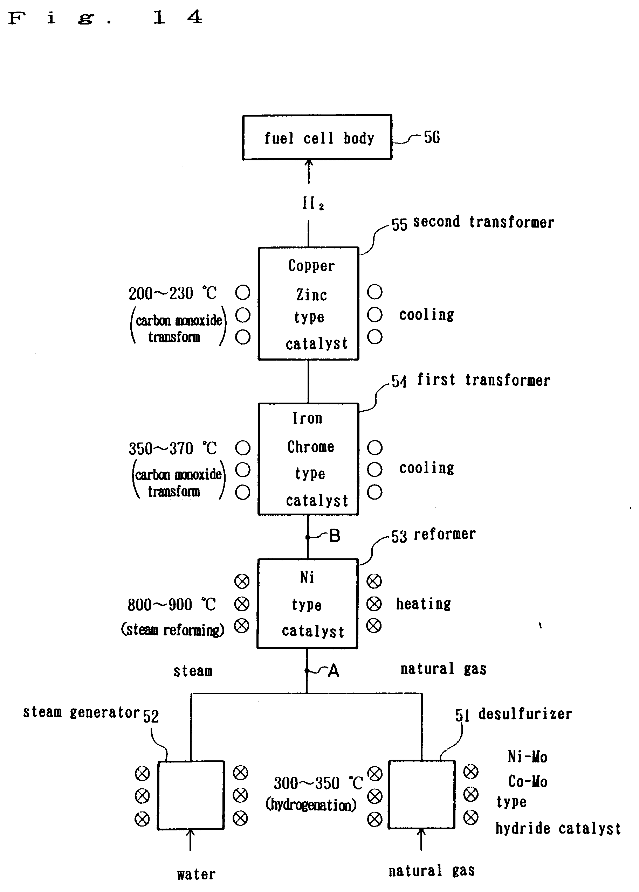

Referring to Fig. 14, a description will be given of fuel cell systems to which the catalytic reaction devices or the catalytic reaction methods of the first to third embodiments are applicable. In fuel cells using natural gas as a raw material, natural gas is converted into hydrogen-rich gas, and then hydrogen is supplied to a phosphatic fuel cell body. Therefore, the natural gas is reformed into hydrogen-rich gas after a specified catalytic reaction through a desulfurizer, a reformer and transformers in order.

In case of the reformer employing a steam reforming for hidrocarbon, the reforming is carried out using Ni or Ru type catalyst provided from 650 to 800 °C and from 1 to 10Kg/cm². This reaction is endothermic.

The life time of Ni or Ru type catalyst is greatly changed by degree of desulfurization, accordingly, a desulfurizer is used before the reformer. In case of the desulfurizer employing hydrogenation desulfurization, an organic sulfur compound is allowed to react with hydrogen at 300 to 350 °C in the presence of Co-Mo or Ni-Mo type catalyst, thereby obtaining hydrogen sulfide (H₂S). Then, the hydrogen sulfide is absorbed by zinc oxide.

Further, hydrogen-rich gas from the reformer contains carbon monoxide serving as a catalyst poison of phosphatic fuel cell bodies. Therefore, the carbon monoxide is allowed to react with steam then they are allowed to be converted into carbon dioxide and hydrogen in a transformer. In these transformers, a hot shift is carried out by using Iron-Chrome type catalyst at 350 to 370 °C, then a cold shift is carried out for remained carbon monoxide by using Copper-Zinc type catalyst at 200 to 230 °C. This hot shift and cold shift are exothermic reactions.

The aforesaid processes going through the desulfurizer, the reformer and the transformers towards the fuel cell body include catalytic reactions under heating or heat absorbing. Therefore, a catalytic reaction device of multitube heat exchanger type is normally employing in the above processes. However, the multitube heat exchangers perform indirect heating through a heat medium. Therefore, its system is complicated and large-sized, further it takes longer time to start the system, and also the following-up to load fluctuation is poor.

On the other hand, the use of the aforesaid catalytic reaction devices of the invention leads to simple processes as shown in Fig. 14. In these processes, the desulfurizer 51 and the steam generator 52 are connected in parallel, and the reformer 53, a first transformer 54, a second transformer 55 and the fuel cell body 56 are connected in series and order.

In the desulfurizer 51, raw material such as natural gas is heated up to a range from 300 to 350 °C in the presence of Co-Mo or Ni-Mo type catalyst. The catalytic reaction device employing electromagnetic induction heating as shown in Fig. 1 can be applied to the desulfurizer 51. Also, the same device as shown in Fig. 1 except the metallic plates free from catalytic particles can be applied to the steam generator 52 since the steam generator 52 merely heats water. The catalytic reaction device employing electromagnetic heating as shown in Fig. 1 can be applied to the reformer 53 since the natural gas is heated up to a range from 650 to 800 °C in the presence of Ni or Ru type catalyst in the reformer 53 and an endothermic chemical reaction causes. The catalytic reaction devices with the heat exchanger tube shown in Fig. 12 can be applied to the the first and second transformers 54, 55 since exothermic reactions cause in the presence of catalyst in the first and second transformers 54, 55. In case of necessity, at a point A in the line of the fuel cell system, it is possible to add a mere preheater comprising the same metallic plates as shown in Fig. 1 except the metallic plates free from catalytic particles. Also, at a point B in the line of the fuel cell system, it is possible to add a mere heat exchanger comprising the same metallic plates as shown in Fig. 12 except free from catalytic particles.

Each of catalytic reaction devices has the advantages in a miniaturization and a reduction of preparing time for starting, and has a high following-up quality to load fluctuation as previously described. Therefore, a noticeable miniaturization, a noticeable reduction of preparing time for starting and a noticeable high following-up quality to load fluctuation can be pursued with a system-scale.

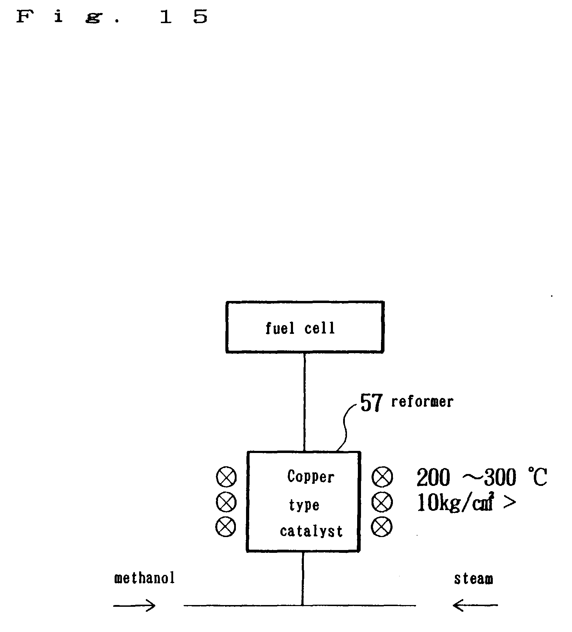

Fig. 15 shows a process where a reformer 57 for methanol is employed. When reforming methanol with steam, reforming is carried out at a range from 200 to 300 °C under low pressure conditions equal to 10Kg/cm² or less with using a copper catalyst normally. Accordingly, when the catalytic reaction device of the invention as shown in Fig. 15 is used, the process can be simplified. This is particularly effective for traveling power supplies such as vehicle power supplies.

The foregoing embodiments exemplify catalytic reactions in endothermic reaction or exothermic reaction. However, the catalytic reaction devices and catalytic reaction methods of the present invention are applicable to fields of air pollution and preservation of the environment although the fields do not relate to endothermic or exothermic reaction. For instance, when eliminating carbon dioxides, nitrogen oxides, sulfur oxides included in exhausted gases, it is able to reduce these objects to be eliminated by allowing them to come into contact with a catalytic metal. In this case, a preheater or superheater is employed in order to raise exhausted gases to a given temperature. The catalytic reaction device of heating type as mentioned above can be employed as a preheater or superheater. On the other hand, the catalytic reaction device of heat absorbing type can be employed as a cooler. In other words, heating type is useful for not only an endothermic reaction but also a mere preheating or superheating, and heat absorbing type is useful for not only an exothermic reaction but also a mere cooling.

### INDUSTRIAL APPLICABILITY

The catalytic reaction devices, catalytic reaction methods and laminates used for catalytic reaction according to the present invention are applicable not only to fuel reforming but also to a variety of reactions at high temperatures in chemical plants. They are also applicable to a wide range of the fields of air pollution and the preservation of the environment, which do not relate to exothermic or endothermic reaction.

## Claims

1. A catalytic reaction device comprising,
a fluid passageway,
a coil provided around the fluid passageway and to which high frequency current is applied,
a laminate provided in the fluid passageway and constructed of metallic plates of conductive material which are laminated so as to be electrically connected with each other,
numbers of regular small channels formed between said metallic plates so that dispersions may be caused in said fluid passing through said laminate, and
catalytic metal that constitutes said metallic plates or is attached to the surfaces of said metallic plates substantially uniformly, wherein
a catalytic reaction is caused on said fluid flowing and dispersed in said laminate at the same time as said laminate generates heat.

2. The catalytic reaction device as claimed in claim 1, wherein said plurality of regular small channels have first small channels, second small channels and third small channels, directions in which the first and second small channels extend respectively cross each other and the third small channels permit to communicate between the first and second small channels.

3. The catalytic reaction device as claimed in claim 1 or 2, wherein said the metallic plates have irregularities formed by satin finishing or embossing on their surfaces.

4. The catalytic reaction device as claimed in claim 1, wherein each of said metallic plates constituting the laminate has a thickness falling in the range from 30 µm to 1mm and the frequency of high frequency current that energizes the coil falls within a range from 15KHz to 150KHz.

5. The catalytic reaction device as claimed in claim 1 or 4, wherein heat transmitting area of the laminate is equal to 2.5cm² or more per 1cm³ of said fluid.

6. The catalytic reaction device as claimed in any of the claim 1, 4 or 5, wherein amount of fluid to be heated is equal to 0.4cm³ or less per 1cm² of heat transmitting area of said laminate.

7. A catalytic reaction method comprising,
a step of substantially uniformly dispersing fluid allowed to pass through a plurality of regular small channels in a laminate which is constructed of metallic plates made of conductive material so as to be electrically connected with each other and further which is disposed in a fluid passageway,
a step of substantially uniformly-heating said fluid passing through said laminate with said substantially uniform dispersion, where said fluid is heated through said metallic plates having said small channels and generating heat substantially uniformly by a high frequency current through a coil provided around said fluid passageway,
a step of causing a uniform catalytic reaction at the same time as said uniform heating to allow said fluid to come into contact with catalytic metal that constitutes said metallic plates or is attached on said surfaces of said metallic plates substantially uniformly.

8. A catalytic reaction device comprising,
a fluid passageway,
a coil provided around said fluid passageway and energized by high frequency current,
an assembly provided in said fluid passageway and constructed of conductive members so as to be electrically connected with each other and so as to form a plurality of channels enabling said fluid to flow in said axial direction of said fluid passageway,
dispersion members provided on at least a fluid entrance side of said assembly for distributing fluid into said channels, and
a catalytic metal that constitutes said conductive members or is attached to said surfaces of said conductive members substantially uniformly, wherein
a catalytic reaction is caused on said fluid flowing in said assembly at the same time as said assembly generates heat.

9. A catalytic reaction method comprising,
a step of forming a substantial uniform flow in a fluid passageway by dispersing a fluid to reach an assembly provided in said fluid passageway and constructed of conductive members so as to be electrically connected with each other and so as to form a plurality of channels enabling said fluid to flow in said axial direction of said fluid passageway,
a step of substantially uniformly heating said fluid passing through said fluid passageway, where said fluid is heated through said conductive members constituting said assembly and generating heat substantially uniformly by a high frequency current going through a coil provided around said fluid passageway,
a step of causing a substantial uniform catalytic reaction at the same time as said substantial uniform heating by allowing said fluid to come into contact with catalytic metal that constitutes said conductive members or is attached on said surfaces of said conductive members.

10. A catalytic reaction device comprising,
a fluid passageway
a laminate disposed in said fluid passageway
a plurality of regular small channels formed between metallic plates constituting said laminate so as to cause a substantial uniform dispersion of a fluid flowing through said laminate, and
a heat exchanger tube fixed so as to substantially uniformly cover said metallic plates and so as to be disposed along said small channels, wherein
a catalytic reaction on said fluid flowing through said laminate with dispersion causes at the same time as heat absorbing by said heat exchanger tube.

11. A catalytic reaction method comprising,
a step of substantially uniformly dispersing fluid allowed to pass through a plurality of regular small channels in a laminate disposed in a fluid passageway,
a step of substantially uniformly exchanging heat between a heat exchanger tube and said fluid passing through said laminate with said substantially uniform dispersion by said heat exchanger tube fixed so as to substantially uniformly cover metallic plates and so as to be disposed along said small channels,
a step of causing a substantial uniform catalytic reaction at the same time as said uniform heat exchange by allowing said fluid to come into contact with catalytic metal that constitutes said metallic plates or is attached on said surfaces of said metallic plates substantially uniformly.

12. A laminate used for catalytic reaction comprising
a laminate body constructed of metallic plates made of conductive material which are laminated so as to be electrically connected with each other,
regular small channels formed between said metallic plates so that dispersion may be substantially uniformly caused in said fluid passing through said laminate body, and
catalytic metal that constitutes said metallic plates or is attached to said surfaces of said metallic plates substantially uniformly.
